# EUROPÄISCHE PATENTSCHRIFT

(11) **EP 3 788 202 B1**
(45) Veröffentlichungstag und Bekanntmachung des Hinweises auf die Patenterteilung: **03.07.2024**
(21) Anmeldenummer: 19723719.1
(22) Anmeldetag: 02.05.2019
(51) Int. Cl.: E01C 11/22

(54) **ENTWÄSSERUNGSRINNE MIT INTEGRIERTEM BORDSTEIN UND ENTWÄSSERUNGSSYSTEM**
DRAINAGE CHANNEL WITH INTEGRATED CURBSTONE, AND DRAINAGE SYSTEM
CANAL DE DRAINAGE À BORD DE TROTTOIR INTÉGRÉ ET SYSTÈME DE DRAINAGE

(30) Priorität: 04.05.2018 DE 102018110721
(43) Veröffentlichungstag der Anmeldung: 10.03.2021
(73) Patentinhaber: ACO Ahlmann SE & Co. KG, 24782 Büdelsdorf (DE)
(72) Erfinder: MEYER, Florian, 24783 Osterrönfeld (DE); KLEHM, Torsten, 22527 Hamburg (DE)
(74) Vertreter: Meissner Bolte Partnerschaft mbB
(86) Internationale Anmeldenummer: PCT/EP2019/061264
(87) Internationale Veröffentlichungsnummer: WO 2019/211384

(56) Entgegenhaltungen:
- WO-A1-2006/071013
- CN-C- 100 422 443
- CN-U- 206 873 232
- DE-A1- 3 210 222
- DE-U1- 7 700 385
- GB-A- 1 284 395
- GB-A- 1 328 099
- GB-A- 2 289 079
- JP-A- 2002 061 105
- KR-A- 20120 097 848

## Beschreibung

Die Erfindung betrifft eine Entwässerungsrinne mit integriertem Bordstein nach dem Oberbegriff des Anspruchs 1. Die Erfindung betrifft ferner ein Entwässerungssystem mit einer derartigen Entwässerungsrinne.

Eine Entwässerungsrinne der eingangs genannten Art ist beispielsweise aus GB 2 315 792 A sowie unter dem Markennamen ACO DRAIN^{®} KerbDrain Bordsteinentwässerung der Anmelderin bekannt.

Wenn bei einem extremen Wetterereignis das anfallende Oberflächenwasser innerstädtisch nicht sicher und zügig abfließt, werden Passanten auf Fußgängerwegen oder wartende Fahrgäste oftmals und unverhofft von vorbeifahrenden Fahrzeugen nassgespritzt. Die bekannte Entwässerungsrinne kombiniert daher zwei Funktionen, nämlich einerseits die Fahrbahnbegrenzung durch einen Bordstein und andererseits die Entwässerung, die in den Bordstein integriert ist. Bei der bekannten Entwässerungsrinne handelt es sich um eine Hochbordrinne mit straßenseitig angeordneten Einlauföffnungen für anfallendes Oberflächenwasser. Durch diese durchgängige lineare Entwässerung wird ein kontinuierlicher und gleichmäßiger Wasserabfluss gewährleistet.

Aus der DE 3210222 A1 ist eine Entwässerungsrinne mit integriertem Bordstein bekannt, der mit einem Rinnenkörper monolithisch ausgebildet ist und eine straßenseitige Schräge aufweist, in der Einlauföffnungen für Oberflächenwasser ausgebildet sind. An den Fußteil der Entwässerungsrinne schließt sich ein Sockel an, der eine auf der Höhe der Fahrbahn liegende Wasserplatte oder -rinne bildet. Unmittelbar an der Wasserplatte oder -rinne liegt die Mündung der Einlauföffnungen. Der Sockel ermöglicht die Bildung eines sauberen Belagabschlusses der Fahrbahn und dadurch eine Erleichterung des Einbringens des Belages auf der Fahrbahn. Zudem bildet die Wasserplatte oder -rinne einen glatten Übergang in die Mündung.

Beim Einbau der Entwässerungsrinne kann Mörtel oder Fugenverguss durch die Einlauföffnungen in die Entwässerungsrinne gelangen. Die Entwässerungsrinne muss dann gereinigt bzw. gespült werden.

Der Erfindung liegt die Aufgabe zu Grunde, die eingangs genannte Entwässerungsrinne mit integriertem Bordstein so zu verbessern, dass diese schnell und einfach verbaut werden kann. Dabei soll die Entwässerungsrinne nicht nur als Hochbordrinne, sondern auch in Kombination mit einem Flachbordstein ausführbar sein. Der Erfindung liegt ferner die Aufgabe zu Grunde, ein Entwässerungssystem mit einer derartigen Entwässerungsrinne anzugeben.

Erfindungsgemäß wird diese Aufgabe durch den Gegenstand des Anspruchs 1 mit Blick auf die Entwässerungsrinne und durch den Gegenstand des Anspruchs 15 mit Blick auf das Entwässerungssystem gelöst.

Konkret wird die Aufgabe nun durch eine Entwässerungsrinne mit integriertem Bordstein gelöst, der mit einem Rinnenkörper ausgebildet ist. Der Bordstein weist eine straßenseitige Schräge auf, der Einlauföffnungen für Oberflächenwasser ausgebildet sind. Solche Entwässerungsrinnen werden in der Praxis auch als Hohlbordrinnen bezeichnet. Die Erfindung gilt also auch für die benannten Hohlbordrinnen. Der Bordstein weist eine abgesetzte Anfahr- und Vergusskante mit einer Breite von 0,5 cm bis 60 cm auf. Die Obergrenze kann vorzugsweise 50 cm, insbesondere 40 cm, insbesondere 30 cm, insbesondere 20 cm, insbesondere 10 cm betragen. Die Untergrenze kann vorzugsweise 1 cm, insbesondere 2 cm, insbesondere 4 cm, insbesondere 6 cm, insbesondere 8 cm betragen. Die Anfahr-und Vergusskante erstreckt sich mit Abstand unterhalb des unteren Randes der Einlauföffnungen, entlang der Längsachse des Bordsteins.

Die Erfindung hat verschiedene Vorteile.

Die Anfahr- und Vergusskante verhindert oder vermeidet zumindest weitgehend, dass Mörtel oder Fugenvergussmasse direkt bis an die Einlauföffnungen aufgebracht wird. Dazu ist die Anfahr-und Vergusskante abgesetzt. Dies bedeutet, dass die Anfahr- und Vergusskante von der Oberfläche der Schräge, in der die Einlauföffnungen ausgebildet sind, und somit von den Einlauföffnungen beabstandet ist und zwar in horizontaler Richtung.

Die Anfahr- und Vergusskante erstreckt sich entlang der Längsachse des Bordsteins. Die Längsachse des Bordsteins verläuft im Einbauzustand der Entwässerungsrinne im Wesentlichen parallel zur Straßenkante, die durch den Bordstein begrenzt wird.

Generell gilt, dass alle Lage- und Richtungsangaben sich auf den Einbauzustand der Entwässerungsrinne beziehen.

Die Breite der abgesetzten Anfahr- und Vergusskante beträgt von 0,5 cm bis 60 cm. Mit zunehmender Breite wird die Sicherheit gegen einlaufenden Mörtel bzw. Vergussmasse erhöht.

Die abgesetzte Anfahr- und Vergusskante hat den weiteren Vorteil, dass diese als Orientierung für einen Straßenfertiger beim Aufbringen des Straßenbelags dient. Wenn die Orientierungshilfe im Vordergrund steht, kann mit einer Breite der Anfahr- und Vergusskante im Bereich von 0,5 cm bis 60 cm gearbeitet werden. Der Vorteil bei einer breiten Vergusskante besteht darin, dass diese breite Vergusskante, die unterhalb der Einlauföffnungen verläuft, als Flansch für den Aufbau eines Straßenbelages, z.B. Fern- und Bundesstraßen, und/oder anderen Bodenbelages, z.B. Radweg oder Fußweg, wirkt. Des Weiteren hat der Flansch den Vorteil, dass zwischen Entwässerungsrinne mit integriertem Bordstein und Straßen- und/oder Bodenbelag eine Abdichtungsebene einfacher realisiert werden kann, da die Fläche des Flansches als Abdichtungsfläche verwendet werden kann und das Risiko für Undichtigkeiten im Bereich Entwässerungsrinne mit integriertem Bordstein und dem Straßen- bzw. Bodenbelag verringert wird. Ein typischer Anwendungsfall ist ein Trogbauwerk.

Die abgesetzte Anfahr- und Vergusskante schützt die Entwässerungsrinne vor etwaigen Schäden während des Einbaus, beispielsweise durch eine Walze. Eine relativ große Breite der Anfahr- und Vergusskante im Bereich von 0,5 cm bis 60 cm verbessert den Schutz der Entwässerungsrinne.

Die Anfahr- und Vergusskante erstreckt sich durchgehend, unterbrechungsfrei im Bereich der Einlauföffnungen entlang der Längsachse des Bordsteins, insbesondere des Flachbordsteins. Damit wird erreicht, dass gerade die Einlauföffnungen durch die Anfahr-und Vergusskante geschützt sind. Außerdem erleichtert eine durchgehende Anfahr- und Vergusskante die Orientierung des Straßenfertiges beim Aufbringen des Straßenbelags.

Bevorzugte Ausführungsformen der Erfindung sind in den Unteransprüchen angegeben.

Bei einer besonders bevorzugten Ausführungsform umfasst der Bordstein einen Bordstein, insbesondere Flachbordstein, dessen straßenseitige Schräge mit einer Steigung von 1:2 bis 1:1 geneigt ist. Diese Ausführungsform ist für Anwendungen geeignet, beispielsweise zur Begrenzung von Verkehrsinseln oder Mittelstreifen, bei denen keine Hochbordsteine erforderlich oder gewünscht sind. Die Anfahr-und Vergusskante erlaubt relativ große Einlauföffnungen in der Schräge des Flachbordsteins, ohne dass die Verschmutzung des Rinnenkörpers durch einlaufenden Mörtel oder zu Gussmasse zu befürchten ist. Daher lässt sich die hydraulische Leistung der Entwässerungsrinne mit integriertem Flachbordstein nach dieser Ausführungsformen steigern.

Der Flachbordstein weist eine straßenseitige Schräge mit einer Steigung von 1:2 bis 1:1 auf. Die Steigung lässt sich in an sich bekannter Weise durch ein Steigungsdreieck bestimmen, das durch die Schräge im Querschnitt als Hypotenuse und die beiden entsprechenden Katheten (Höhe/Länge) gebildet ist. Beispielsweise entspricht eine Steigung von 1:2 einer Höhe der Schräge von 5 cm auf eine Länge von 10 cm. Eine Steigung von 1:1 entspricht beispielsweise einer Höhe von 10 cm auf eine Länge von 10 cm bzw. einem Neigungswinkel von 45°. Eine weitere typische Steigung für einen Flachbordstein beträgt 7:10, also 7 cm auf 10 cm. Es ist zudem möglich, dass der Flachbordstein auch als Bordstein ausgebildet sein kann. In diesem Fall weist die straßenseitige Bordfläche einen Winkel zu einem sich im Inneren der Entwässerungsrinne ausbildenden Wasserspiegel von 90° bis 45°, insbesondere von 80° bis 55°. Dies hat den Vorteil, dass die erfindungsgemäße Entwässerungsrinne mit integrierten Bordstein auch mit marktüblichen Entwässerungsrinne mit integrierten Bordstein kombiniert werden kann. Der Winkelbereich von 90° bis 45° bietet den Vorteil, dass ein Fahrzeug, dass mit seinen Rädern gegen die straßenseitige Bordfläche prallt, von der Bordfläche daran gehindert wird den Bordstein zu überfahren und die Straße unkontrolliert zu verlassen. Die Verkehrssicherheit von Straßen kann damit erhöht werden.

Wenn sich die Einlauföffnungen bis maximal 20 mm unterhalb der Oberkante des Bordsteins, insbesondere des Flachbordsteins erstrecken, wird vermieden, dass Passanten beim Betreten des Bordsteins durch die Einlauföffnungen nicht beeinträchtigt werden.

Die Einlauföffnungen können seitliche Innenflächen aufweisen, die abschnittsweise an den Außenkanten der Einlauföffnungen oder vollständig nach innen geneigt sind. Dadurch wird bewirkt, dass sich bspw. Schneeschieber in den Wintermonaten nicht in den Einlauföffnungen verhaken, wenn diese trotz der Anfahr- und Vergusskante mit den Einlauföffnungen kollidieren. Außerdem wird der Zulauf verbessert. Dabei können die Einlauföffnungen eine Fase im Bereich der Außenkante aufweisen, d.h. die seitlichen Innenflächen sind abschnittsweise an den Außenkanten der Einlauföffnungen nach innen geneigt. Es ist auch möglich, dass die seitlichen Innenflächen über die gesamte Tiefe der Einlauföffnungen nach innen geneigt sind, d.h. vollständig nach innen geneigt sind. Die Neigung der Innenflächen nach innen bedeutet, dass sich die Einlauföffnungen von außen nach innen verjüngen.

Es hat sich als vorteilhaft erwiesen, wenn die seitlichen Innenflächen bezogen auf die Oberfläche der Schräge mit einem Winkel von 15° bis 60° nach innen geneigt sind.

Die Einlauföffnungen können obere Innenflächen aufweisen, die abgerundet und/oder abschnittsweise an den Außenkanten der Einlauföffnungen oder vollständig nach innen geneigt sind. Auch hier gilt, dass die Innenflächen entweder angefast oder vollständig entlang der gesamten Tiefe der Einlauföffnungen geneigt sind.

Bei einer weiteren bevorzugten Ausführungsform weist eine straßenabgewandte Rückseite der Entwässerungsrinne weitere Einlauföffnungen für Sickerwasser auf. Dadurch wird beispielsweise die Drainage von Grünflächen oder Mittelstreifen möglich, die sich an die Rückseite der Entwässerungsrinne anschließen. Die Entwässerungsrinne kann mit einer Drainagematte oder anderen Drainagemitteln kombiniert werden, sodass das Sickerwasser in die weiteren Einlauföffnungen auf der Rückseite der Entwässerungsrinne geleitet wird.

Bei einer weiteren bevorzugten Ausführungsform sind weitere Einlauföffnungen für Sickerwasser unterhalb der Anfahr- und Vergusskante angeordnet. Diese Ausführungsform ist beispielsweise für den Einsatz von offenporigen Asphalt- und/oder von Betonbelägen geeignet.

Vorzugsweise sind der Rinnenkörper und der Bordstein, insbesondere der Flachbordstein aus Polymerbeton gebildet. Das aufgrund des Polymerbetons geringe Gewicht, die Integration von Entwässerungsrinne und Bordstein und die einfache Reinigung machen die Entwässerungsrinne kostengünstig von der Installation bis hin zur Nutzung. Durch den bewährten Werkstoff Polymerbeton ist die Entwässerungsrinne hochstabil (Belastungsklasse D 400) sowie frost- und chemikalienbeständig und kann dort genutzt werden, wo herkömmliche Produkte nur schwer und kostenintensiv zu installieren sind.

Wenn der Bordstein, insbesondere der Flachbordstein wenigstens eine lumineszierende Außenfläche aufweist, wird die Sicherheit beispielsweise an Bushaltestellen oder generell bei der Fahrbahnbegrenzung erhöht. Die Entwässerungsrinne hat dann für den Fahrzeughalter bei schlechter Wettersituation, zum Beispiel bei starker Sichtbeeinträchtigung durch Regen, Nebel, Schnee und/oder Dunkelheit eine unterstützende Orientierungswirkung. Der Leuchteffekt entsteht durch lumineszierende Partikel in der Außenfläche des Bordsteins, die das tagsüber aufgenommene UV-Licht in der Dunkelheit oder bei Wegfall der Nichteinstrahlung mit Verzögerung wieder als Licht einer Farbe abgeben. Da die Oberseite der Entwässerungsrinne nicht überfahren wird, kommt es auch nicht zu möglichen Abnutzungserscheinungen an der lumineszierende/leuchtenden Oberfläche. Alternativ sind als Leitstreifen auch bereits im Produktionsprozess eingelegte Reflexionsstreifen möglich.

Bei einer weiteren bevorzugten Ausführungsformen weist der Bordstein, insbesondere der Flachbordstein wenigstens eine Außenfläche mit Solarzellen auf. Dies hat den Vorteil, dass beispielsweise an einer Autobahn Strom aus Sonnenenergie für vorhandene Leitsysteme, zum Beispiel Beschilderung oder für andere Lichtquellen genutzt werden kann.

Der Bordstein, insbesondere Flachbordstein kann wenigstens einen Kabelkanal aufweisen, der sich auf der straßenabgewandten Seite des Bordsteins, insbesondere des Flachbordsteins oder des Rinnenkörpers erstreckt. Diese Ausführungsform eignet sich besonders im Zusammenhang mit Solarzellen, weil der am Bordstein erzeugte Solarstrom direkt abgeleitet werden kann.

Es ist auch möglich, den Bordstein, insbesondere Flachbordstein mit einer rutschhemmenden Oberfläche zu versehen. Als rutschhemmende Oberflächen können Besandungen, Oberflächenstrukturen (z.B. Noppen) oder Beschichtungen verwendet werden.

An wenigstens einer Stirnseite kann der Rinnenkörper eine einsteckbare Profildichtung aufweisen, sodass der Rinnenkörper in an sich bekannter Weise von oben eingebaut werden kann.

Im Rahmen der Erfindung wird ferner ein Entwässerungssystem mit wenigstens einer erfindungsgemäßen Entwässerungsrinne und wenigstens einem Einlaufkasten oder einem Revisionselelement offenbart und beansprucht. Der Einlaufkasten ist an die Entwässerungsrinne anschließbar oder angeschlossen. Der Einlaufkasten weist an beiden Seiten eine straßenseitige Schräge auf, die mit derselben Steigung wie die Schräge der Entwässerungsrinne geneigt ist. Das Revisionselement kann sich vom Einlaufkasten dadurch unterscheiden, dass das Revisionselement einen geschlossen Boden aufweist und zwar eine wasserleitende Funktion aber keine wasserableitende Funktion wie ein Einlaufkasten aufweist. Es gibt jedoch auch Revisionselemente die beide Funktionen - Wasserleitung und Wasserableitung - umfassen.

Die Erfindung wird nachfolgend mit weiteren Einzelheiten unter Bezug auf die beigefügten schematischen Zeichnungen anhand eines Ausführungsbeispiels näher beschrieben.

In diesen zeigen:
- Fig. 1: eine perspektivische Ansicht einer Entwässerungsrinne nach einem nicht erfindungsgemäßen Ausführungsbeispiel, die mit einem Einlaufkasten verbunden ist, und
- Fig. 2: einen Schnitt in der Entwässerungsrinne nach Fig. 1 im Bereich einer Einlauföffnung.

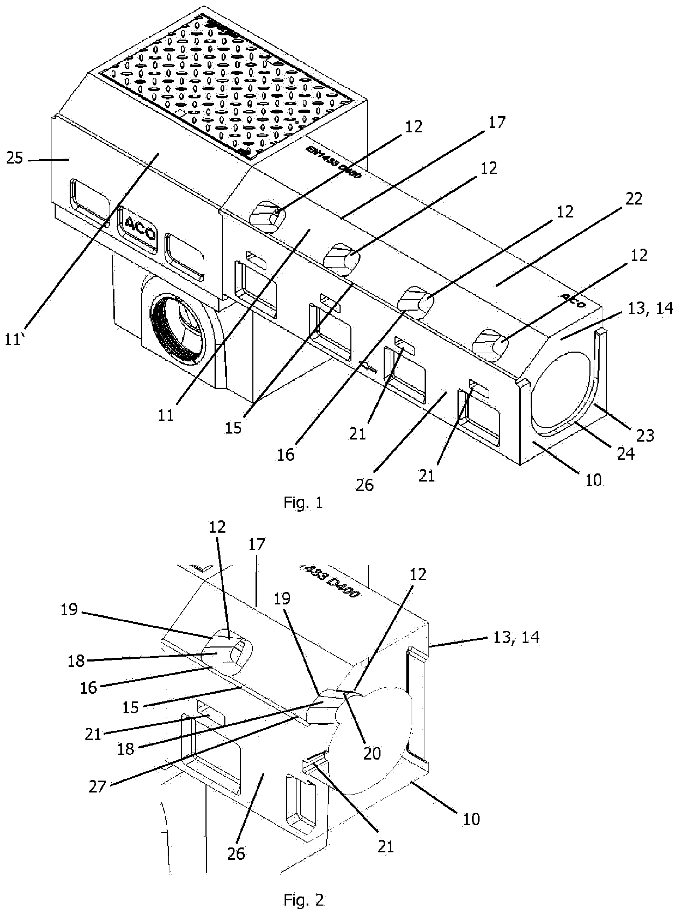

Fig. 1 zeigt eine Entwässerungsrinne mit integriertem Bordstein 14. Der Gegenstand aus Fig. 1 kann auch als Bordstein mit integrierter Entwässerungsrinne bezeichnet werden. Die Entwässerungsrinne weist einen Rinnenkörper auf, der mit dem Bordstein 14 monolithisch ausgebildet ist. Die Entwässerungsrinne mit integriertem Bordstein 14 bildet ein einstückiges, monolithisch ausgebildetes Bauteil.

Bei dem Beispiel gemäß Fig. 1 ist der Bordstein 14 als Flachbordstein 13 ausgebildet. Die Erfindung ist nicht auf Flachbordsteine eingeschränkt, sondern kann auch für andere Bordsteine, bspw. Hochbordsteine eingesetzt werden. Die Vorteile der Erfindung kommen bei Flachbordsteinen besonders gut zum Tragen.

Unter einem Flachbordstein wird beispielsweise ein Flachbordstein vom Typ F7 bis F20 zur Begrenzung einer Straßenseite verstanden. Ein Flachbordstein vom Typ F7 weist eine straßenseitige Schräge 11 auf, die auf einer Länge von 10 cm senkrecht zur Längsachse des Flachbordsteins 13 auf eine Höhe von 7 cm ansteigt. Die Steigerung beträgt daher 7:10. Flachbordsteine mit anderen Steigungen im Bereich von 1:2 bis 1:1 sind möglich. Die Steigung der straßenseitigen Schräge 11 ist nicht mit dem Gefälle der Rinne entlang der Straße zu verwechseln.

Die Längsachse der Entwässerungsrinne bzw. des Flachbordsteins 13 entspricht der Mittelachse der Entwässerungsrinne, die sich entlang der längeren Seite der Entwässerungsrinne erstreckt. Die längere Seite der Entwässerungsrinne ist im Einbauzustand parallel zur Straßenkante angeordnet. Die Mittelachse bzw. Längsachse kann gerade oder gekrümmt sein.

In der straßenseitigen Schräge 11 sind mehrere Einlauföffnungen 12 ausgebildet, durch die Oberflächenwasser abgeführt wird. Dazu sind die nach außen offenen Einlauföffnungen 12 mit dem Rinnenkörper 10 verbunden. Das Oberflächenwasser fließt durch die Einlauföffnungen in den Rinnenkörper 10 und wird von dort zum Einlaufkasten 25 geleitet, der mit der Entwässerungsrinne verbunden ist, wie in Fig. 1 dargestellt.

Der Bordstein 14 weist eine abgesetzte Anfahr- und Vergusskante 15 auf. Die Anfahr- und Vergusskante 15 begrenzt die Schräge 11 nach unten und verläuft, wie die Schräge 11, entlang der Straßenseite (im Einbauzustand) bzw. entlang der Längsachse des Bordsteins 14. Die Anfahr- und Vergusskante 15 bildet eine horizontale Abstandsfläche zwischen der senkrechten Vorderwand 26 der Entwässerungsrinne und der Unterkante 27 der Schräge 11. Dadurch wird ein Abstand zwischen der Vorderkante 26 und den in der Schräge 11 ausgebildeten Einlauföffnungen 12 gebildet. Durch diesen Abstand wird zumindest weitgehend vermieden, dass Mörtel oder Fugenvergussmasse beim Einbau der Entwässerungsrinne in die Einlauföffnungen gelangen kann. Je breiter die Anfahr-und Vergusskante 15 ist, umso besser wird das Eindringen von Mörtel oder Vergussmasse verhindert.

Die Anfahr- und Vergusskante 15 hat die weitere Funktion, als Orientierungshilfe für Straßenfertiger beim Aufbringen des Straßenbelages zu dienen. Außerdem schützt die Anfahr- und Vergusskante 15 die Einlauföffnungen 12 beim Einbau. Die Breite der Anfahr- und Vergusskante 15 liegt in einem Bereich von 0,5 cm bis 60 cm. Die Untergrenze kann 1 cm, 1,5 cm, 2 cm, 2,5 cm, 3 cm oder mehr, z.B. bei der Ausbildung als Flansch (Auflager für Straßen- oder Bodenbelag) betragen.

Wie in Fig. 1 gut zu erkennen, erstreckt sich die Anfahr- und Vergusskante 15 durchgehend über die gesamte Länge der Entwässerungsrinne bzw. des Bordsteins 14, einschließlich der Bereiche, in denen die Einlauföffnungen 12 ausgebildet sind. Mit anderen Worten sind die Einlauföffnungen 12 bezogen auf die Vorderseite 26 der Entwässerungsrinne 10 zurückversetzt und zwar um die Breite der Anfahr- und Vergusskante 15.

Bei dem nicht erfindungsgemäßen Ausführungsbeispiel gemäß Fig. 1 verläuft die Anfahr- und Vergusskante 15 auf derselben Höhe, wie die untere Kante 16 der Einlauföffnungen 12. Die Einlauföffnungen 12 schließen direkt an die Anfahr- und Vergusskante 15 nach hinten versetzt an. Erfindungsgemäß sind die Einlauföffnungen 12 mit etwas Abstand oberhalb der Anfahr- und Vergusskante 15 angeordnet, sodass nicht nur in horizontaler Richtung, sondern auch in vertikaler Richtung ein Abstand zwischen der Vorderseite 26 und den Einlauföffnungen 12 gebildet wird. Dadurch wird die Sicherheit gegen einlaufenden Mörtel oder Fugenvergussmasse verbessert.

Wie in Fig. 2 zu erkennen, weisen die in der Schräge 11 ausgebildeten Einlauföffnungen 12 seitliche Innenflächen 18 auf. Die seitlichen Innenflächen 18 begrenzen die Einlauföffnungen 12 in einer Richtung entlang der Anfahr- und Vergusskante 15. Die seitlichen Innenflächen 18 können gerade, d.h. unter einem Winkel von 90° bezogen auf die Oberfläche der Schräge 11 von außen nach innen verlaufen. Alternativ können die Einlauföffnungen 12 zulaufseitig mit einer größeren Abschrägung versehen sein. Mit anderen Worten können die Einlauföffnungen 12 bzw. deren seitliche Innenflächen 18 abschnittsweise an den Außenkanten 19 der Einlauföffnungen 12 nach innen geneigt sein. Die Einlauföffnungen 12 sind mit einer Phase versehen. Es ist auch möglich, dass die Einlauföffnungen 12 vollständig, d.h. über deren gesamte Länge nach innen geneigt sind. Dadurch wird der Zulauf verbessert. Bei einem möglichen Anprall eines Schneeschiebers wird dieser abgeleitet, sodass ein Verhaken des Schneeschiebers mit den Einlauföffnungen 12 verhindert wird. Die Innenflächen können bezogen auf die Oberfläche der Schräge 11 unter einem Winkel von 15° bis 60° nach innen geneigt sein. Dasselbe gilt für die oberen Innenflächen 20 sowie die unteren Innenflächen, die gerundet und/oder ebenfalls nach innen geneigt sein können.

Wie in den Figuren 1, 2 zu erkennen, sind in der Vorderseite 26 weitere Einlauföffnungen 21 für Sickerwasser angeordnet. Die weiteren Einlauföffnungen 21 befinden sich unterhalb der Anfahr- und Vergusskante 15. Es ist möglich, weitere Einlauföffnungen auch auf der Rückseite, d.h. auf der straßenabgewandten Seite der Entwässerungsrinne anzuordnen. Die rückseitigen Einlauföffnungen können mit einem Drainagesystem, beispielsweise einer Drainagematte verbunden sein.

Der in den Figuren 1, 2 dargestellte Bordstein 14 kann mit weiteren Funktionalitäten ausgestattet sein, beispielsweise mit einer lumineszierenden Außenfläche 22 und/oder mit Solarzellen auf der Außenfläche 22. Für die Solarzellen oder für andere elektrische Anwendungen kann der Bordstein 14 einen Kabelkanal auf dessen Rückseite aufweisen. Auf der Stirnseite 23 des Rinnenkörpers 10 befindet sich eine einsteckbare Profildichtung 24, die hier nicht gezeigt ist, aber im eingebauten Zustand zur Abdichtung vorgesehen ist.

In die Entwässerungsrinne kann, wie in Fig. 1 dargestellt, Teil eines Entwässerungssystems mit mehreren Komponenten sein, die baukastenartig miteinander kombiniert werden können. Dazu ist die Entwässerungsrinne mit einem Einlaufkasten 25 verbindbar bzw. verbunden. Der Einlaufkasten 25 weist eine straßenseitige Schräge 11` auf, deren Neigung der Neigung der Schräge 11 der Entwässerungsrinne entspricht, sodass eine durchgehende Schräge 11, 11` mit entsprechend durchgehender Anfahr- und Vergusskante 15 gebildet wird. Das Entwässerungssystem kann weitere Komponenten, wie beispielsweise Absenker oder Mittelsteine aufweisen.

Zusammengefasst wird ein monolithisches Entwässerungssystem bzw. eine monolithische Entwässerungsrinne, zum Beispiel mit einem Entwässerungsrinnenkörper mit einer Nennweite 200 mit seitlich liegenden Einlauföffnungen 12 zur Aufnahme von Oberflächenwasser und einem angeformten Flachbordstein von bspw. 7 cm (angelehnt an z.b. Flachbord Typ F7/F20) und einer zur Straßenseite integrierten Anfahr- und Vergusskante 15 offenbart. Die Position der Anfahr- und Vergusskante 15 kann mindestens auf Höhe der 16 Unterkante der Einlauföffnungen 12 liegen und min. 0,5 cm und max. 10cm stark ausgeführt sein.

Die Anfahr- und Vergusskante 15 dient den folgenden Zwecken: Durchgehende Anfahrkante als kontinuierliche Orientierung für den Straßenbelag-Fertiger; Schutz des Entwässerungselements vor etwaigen Schäden während des Einbaus (z.B. durch eine Walze); Vergussschutz zur Vermeidung von einlaufendem Mörtel und/oder Fugenverguss (aktiver Bauzeitenschutz).

Das Rinnensystem ist ferner mit einer integrierten und steckbaren Profildichtung an der Einlauf- und/oder Auslaufseite ausgeführt, so dass eine Verlegung von oben möglich ist.

Das System entsprich mindestens der in der DIN EN 1433 genannten Belastungsklasse D400. Die Baulänge des Entwässerungskörpers sollte eine Mindestlänge von 0,2 m nicht unterschreiten und ist nach oben hin offen.

Das Rinnensystem ist optional für den Einsatz von offenporigem Asphalt- und/oder Betonbelägen, mit zusätzlichen seitlichen Einlauföffnungen 21 ausgestattet. Das System verfügt über einen an das Rinnenkörper-Design angepassten Einlaufkasten 25 mit einer an der Oberseite angeordneten, schraublos verkehrssicher arretierten Gussabdeckung und dient der Revision, Kontrolle und/oder Reinigung des Entwässerungssystems.

### Bezugszeichenliste

- 10: Rinnenkörper
- 11, 11': Schräge
- 12: Einlauföffnungen
- 13: Flachbordstein
- 14: Bordstein
- 15: Anfahr- und Vergusskante
- 16: unterer Rand
- 17: Oberkante
- 18: seitliche Innenflächen
- 19: Außenkanten
- 20: obere Innenflächen
- 21: weitere Einlauföffnungen
- 22: Außenflächen
- 23: Stirnseite
- 24: Profildichtung
- 25: Einlaufkasten
- 26: Vorderwand
- 27: Unterkante der Schräge

## Patentansprüche

1. Entwässerungsrinne mit integriertem Bordstein, der mit einem Rinnenkörper (10) monolithisch ausgebildet ist und eine straßenseitige Schräge (11) aufweist, in der Einlauföffnungen (12) für Oberflächenwasser ausgebildet sind,
wobei der Bordstein (14) eine abgesetzte Anfahr- und Vergusskante (15) aufweist, an die sich eine senkrechte Vorderwand (26) des Rinnenkörpers (10) anschließt, wobei die Anfahr-und Vergusskante (15) eine horizontale Abstandsfläche zwischen der senkrechten Vorderwand 26 des Rinnenkörpers und der Unterkante 27 der Schräge 11 bildet, die sich durchgehend über die gesamte Länge des Bordsteins (14), einschließlich der Bereiche, in denen die Einlauföffnungen (12) ausgebildet sind, erstreckt,
**dadurch gekennzeichnet, dass**
die Anfahr- und Vergusskante (15) eine Breite von 0,5 bis 60 cm aufweist und sich mit Abstand unterhalb der Einlauföffnungen (12) entlang der Längsachse des Bordsteins (14) erstreckt.

2. Entwässerungsrinne nach Anspruch 1
**dadurch gekennzeichnet, dass**
der Bordstein (14) einen Bordstein (13) umfasst, dessen straßenseitige Schräge (11) mit einer Steigung von 1:2 bis 1:1 geneigt ist.

3. Entwässerungsrinne nach Anspruch 1 oder 2
**dadurch gekennzeichnet, dass**
der Bordstein (14) ein Flachbordstein (13) ist.

4. Entwässerungsrinne nach einem der vorhergehenden Ansprüche
**dadurch gekennzeichnet, dass**
die Einlauföffnungen (12) sich bis maximal 20 mm unterhalb der Oberkante (17) des Bordsteins (14), insbesondere des Flachbordsteins (13) erstecken.

5. Entwässerungsrinne nach einem der vorhergehenden Ansprüche
**dadurch gekennzeichnet, dass**
die Einlauföffnungen (12) seitliche Innenflächen (18) aufweisen, die abschnittsweise an den Außenkanten (19) der Einlauföffnungen (12) oder vollständig nach innen geneigt sind.

6. Entwässerungsrinne nach Anspruch 5
**dadurch gekennzeichnet, dass**
die seitlichen Innenflächen (18) bezogen auf die Oberfläche der Schräge (11) mit einem Winkel von 15° bis 60° nach innen geneigt sind.

7. Entwässerungsrinne nach einem der vorhergehenden Ansprüche
**dadurch gekennzeichnet, dass**
die Einlauföffnungen (12) obere Innenflächen (20) aufweisen, die abgerundet und/oder abschnittsweise an den Außenkanten (19) der Einlauföffnungen (12) oder vollständig nach innen geneigt sind.

8. Entwässerungsrinne nach einem der vorhergehenden Ansprüche
**dadurch gekennzeichnet, dass**
eine straßenabgewandte Rückseite weitere Einlauföffnungen für Sickerwasser aufweist.

9. Entwässerungsrinne nach einem der vorhergehenden Ansprüche
**dadurch gekennzeichnet, dass**
weitere Einlauföffnungen (21) für Sickerwasser unterhalb der Anfahr- und Vergusskante (15) angeordnet sind.

10. Entwässerungsrinne nach einem der vorhergehenden Ansprüche
**dadurch gekennzeichnet, dass**
der Rinnenkörper (10) und der Bordstein (14), insbesondere der Flachbordstein (13) aus Polymerbeton gebildet sind.

11. Entwässerungsrinne nach einem der vorhergehenden Ansprüche
**dadurch gekennzeichnet, dass**
der Bordstein (14), insbesondere der Flachbordstein (13) wenigstens eine luminiszierende Außenfläche (22) aufweist.

12. Entwässerungsrinne nach einem der vorhergehenden Ansprüche
**dadurch gekennzeichnet, dass**
der Bordstein (14), insbesondere der Flachbordstein (13) wenigstens eine Außenfläche (22) mit Solarzellen aufweist.

13. Entwässerungsrinne nach einem der vorhergehenden Ansprüche
**dadurch gekennzeichnet, dass**
der Bordstein (14), insbesondere der Flachbordstein (13) wenigstens einen Kabelkanal aufweist, der sich auf der straßenabgewandten Rückseite des Bordsteins (14), insbesondere des Flachbordsteins (13) oder des Rinnenkörpers (10) erstreckt.

14. Entwässerungsrinne nach einem der vorhergehenden Ansprüche
**dadurch gekennzeichnet, dass**
der Rinnenkörper (10) wenigstens eine Stirnseite (23) mit einer einsteckbaren Profildichtung (24) aufweist.

15. Entwässerungssystem mit wenigstens einer Entwässerungsrinne nach Anspruch 1 und wenigstens einem Einlaufkasten (25), der an die Entwässerungsrinne anschließbar oder angeschlossen ist, wobei der Einlaufkasten (25) eine straßenseitige Schräge (11) aufweist, die mit derselben Steigung wie die Schräge der Entwässerungsrinne geneigt ist.

## Claims

1. Drainage channel with integrated curbstone, which is formed monolithically with a channel body (10) and has a road-side slope (11), in which inlet openings (12) for surface water are formed, wherein the curbstone (14) has a stepped approach and grouting edge (15), which is adjoined by a vertical front wall (26) of the channel body (10), wherein the approach and grouting edge (15) forms a horizontal spacer surface between the vertical front wall 26 of the channel body and the lower edge 27 of the slope 11, which extends continuously over the entire length of the curbstone (14), including the areas in which the inlet openings (12) are formed, **characterized in that** the approach and grouting edge (15) has a width of 0.5 to 60 cm and extends at a distance below the inlet openings (12) along the longitudinal axis of the curbstone (14).

2. Drainage channel according to claim 1, **characterized in that** the curbstone (14) comprises a curbstone (13) whose slope (11) on the road side is inclined at a gradient of 1:2 to 1:1.

3. Drainage channel according to claim 1 or 2, **characterized in that** the curbstone (14) is a flat curbstone (13).

4. Drainage channel according to one of the preceding claims, **characterized in that** the inlet openings (12) extend to a maximum of 20 mm below the upper edge (17) of the curbstone (14), in particular of the flat curbstone (13).

5. Drainage channel according to one of the preceding claims, **characterized in that** the inlet openings (12) have lateral inner surfaces (18) which are inclined inwards in sections at the outer edges (19) of the inlet openings (12) or completely inwards.

6. Drainage channel according to claim 5, **characterized in that** the lateral inner surfaces (18) are inclined inwards at an angle of 15° to 60° relative to the surface of the slope (11).

7. Drainage channel according to one of the preceding claims, **characterized in that** the inlet openings (12) have upper inner surfaces (20) which are rounded and/or inclined inwards in sections at the outer edges (19) of the inlet openings (12) or completely inwards.

8. Drainage channel according to one of the preceding claims, **characterized in that** a rear side facing away from the road has further inlet openings for seepage water.

9. Drainage channel according to one of the preceding claims, **characterized in that** further inlet openings (21) for seepage water are arranged below the approach and grouting edge (15).

10. Drainage channel according to one of the preceding claims, **characterized in that** the channel body (10) and the curbstone (14), in particular the flat curbstone (13), are formed from polymer concrete.

11. Drainage channel according to one of the preceding claims, **characterized in that** the curbstone (14), in particular the flat curbstone (13), has at least one luminescent outer surface (22).

12. Drainage channel according to one of the preceding claims, **characterized in that** the curbstone (14), in particular the flat curbstone (13), has at least one outer surface (22) with solar cells.

13. Drainage channel according to one of the preceding claims, **characterized in that** the curbstone (14), in particular the flat curbstone (13), has at least one cable duct which extends on the rear side of the curbstone (14), in particular of the flat curbstone (13) or of the channel body (10), facing away from the road.

14. Drainage channel according to one of the preceding claims, **characterized in that** the channel body (10) has at least one end face (23) with an insertable profile seal (24).

15. Drainage system having at least one drainage channel according to claim 1 and at least one inlet box (25) which can be connected or is connected to the drainage channel, wherein the inlet box (25) has a slope (11) on the road side which is inclined with the same gradient as the slope of the drainage channel.

## Revendications

1. Caniveau avec une bordure intégrée, de construction monolithique avec un corps de caniveau (10) et qui présente du côté de la chaussée une pente (11) dans laquelle sont formés des ouvertures d'entrée (12) pour les eaux de surfaces, dans laquelle la bordure (14) présente un rebord de revêtement et de jointoiement (15) renfoncé auquel se raccorde une paroi antérieure verticale (26) du corps de caniveau (10), le rebord de revêtement et de jointoiement (15) formant une surface d'écartement horizontale entre la paroi antérieure verticale (26) du corps de caniveau et le bord inférieur (27) de la pente (11) qui s'étend de façon continue sur toute la longueur de la bordure (14), y compris dans les zones où sont formées les ouvertures d'entrée (12), **caractérisé en ce que** le rebord de revêtement et de jointoiement (15) présente une largeur de 0,5 à 60 cm et s'étend à distance en dessous des ouvertures d'entrée (12) le long de l'axe longitudinal de la bordure (14).

2. Caniveau selon la revendication 1, **caractérisé en ce que** la bordure (14) comprend une bordure (13) dont la pente (11) du côté de la chaussée monte selon une inclinaison de 1:2 à 1:1.

3. Caniveau selon la revendication 1 ou 2, **caractérisé en ce que** la bordure (14) est une bordure plate (13).

4. Caniveau selon l'une des revendications précédentes, **caractérisé en ce que** les ouvertures d'entrée (12) s'étendent jusqu'à 20 mm au maximum en dessous du bord supérieur (17) de la bordure (14), en particulier de la bordure plate (13).

5. Caniveau selon l'une des revendications précédentes, **caractérisé en ce que** les ouvertures d'entrée (12) présentent des surfaces intérieures latérales (18) qui sont inclinées vers l'intérieur, partiellement sur les bords extérieurs (19) des ouvertures d'entrée (12) ou entièrement.

6. Caniveau selon la revendication 5, **caractérisé en ce que** les surfaces intérieures latérales (18) sont inclinées vers l'intérieur par rapport à la surface de la pente (11) selon un angle de 15° à 60°.

7. Caniveau selon l'une des revendications précédentes, **caractérisé en ce que** les ouvertures d'entrée (12) présentent des surfaces inférieures supérieures (20) qui sont arrondies et/ou inclinées vers l'intérieur, partiellement sur les bords extérieurs (19) des ouvertures d'entrée (12) ou entièrement.

8. Caniveau selon l'une des revendications précédentes, **caractérisé en ce qu'**une face arrière tournée à l'opposé de la chaussée comporte d'autres ouvertures d'entrée pour les eaux d'infiltration.

9. Caniveau selon l'une des revendications précédentes, **caractérisé en ce que** d'autres ouvertures d'entrée (21) pour les eaux d'infiltration sont disposées en dessous du rebord de revêtement et de jointoiement (15).

10. Caniveau selon l'une des revendications précédentes, **caractérisé en ce que** le corps de caniveau (10) et la bordure (14), en particulier la bordure plate (13), sont construits en béton polymère.

11. Caniveau selon l'une des revendications précédentes, **caractérisé en ce que** la bordure (14), en particulier la bordure plate (13), comporte au moins une surface extérieure luminescente (22).

12. Caniveau selon l'une des revendications précédentes, **caractérisé en ce que** la bordure (14), en particulier la bordure plate (13), comporte au moins une surface extérieure (22) munie de cellules solaires.

13. Caniveau selon l'une des revendications précédentes, **caractérisé en ce que** la bordure (14), en particulier la bordure plate (13), comporte au moins une goulotte de câbles qui s'étend sur la face arrière tournée à l'opposé de la chaussée de la bordure (14), en particulier de la bordure plate (13), ou du corps de caniveau (10).

14. Caniveau selon l'une des revendications précédentes, **caractérisé en ce que** le corps de caniveau (10) comporte au moins une face d'extrémité (23) munie d'un joint d'étanchéité profilé (24) emboîtable.

15. Système d'écoulement des eaux avec au moins un caniveau selon la revendication 1 et avec au moins un avaloir (25) qui peut être raccordé ou est raccordé au caniveau, lequel avaloir (25) présente une pente (11) du côté de la chaussée qui est monte selon la même inclinaison que la pente du caniveau.
